# EUROPÄISCHE PATENTANMELDUNG

(11) **EP 4 478 244 A1**
(43) Veröffentlichungstag der Anmeldung: **18.12.2024**
(21) Anmeldenummer: 23179095.7
(22) Anmeldetag: 14.06.2023
(51) Int. Cl.: G06K 7/10, G01D 5/347, G01S 17/50, G01V 8/22

(54) **SYSTEM UND VERFAHREN ZUM BESTIMMEN EINER BEWEGUNG EINES CODESTREIFENS RELATIV ZU EINEM OPTISCHEN SENSOR**

(71) Anmelder: Pepperl+Fuchs SE, 68307 Mannheim (DE)
(72) Erfinder: KAISER, Florian, 68307 Mannheim (DE); BLANKENBURG, Christoph, 68307 Mannheim (DE)
(74) Vertreter: Schiffer, Axel Martin

(57) **Zusammenfassung**

Die Erfindung betrifft ein System zur Bestimmung einer Bewegung eines Codestreifens relativ zu einem optischen Sensor, mit dem Codestreifen, der entlang einer Erstreckungsrichtung eine Vielzahl von Markern aufweist, und mit dem optischen Sensor der folgende Komponenten aufweist: mindestens ein Lichtsender zum Senden eines Sendelichtstrahls als mindestens ein Leuchtfleck auf den Codestreifen, mindestens einen Detektor zum Nachweisen von von dem Codestreifen infolge der Bestrahlung mit dem Leuchtfleck abgestrahltem Detektionslicht und eine Steuer- und Auswerteeinheit zum Ansteuern des mindestens einen Senders und zum Auswerten eines von dem mindestens einen Detektor nachgewiesenen Detektionssignals. Das System ist dadurch gekennzeichnet, dass zum Ablenken des Sendelichtstrahls eine ansteuerbare Strahlablenkeinrichtung vorhanden ist und dass die Steuer- und Auswerteeinheit dazu eingerichtet ist, die Strahlablenkeinrichtung dergestalt anzusteuern, dass der Leuchtfleck auf dem Codestreifen in seiner Erstreckungsrichtung hin und her bewegt wird, und anhand einer durch die Marker bewirkten Zeitabhängigkeit des nachgewiesenen Detektionssignals eine Bewegung des Codestreifens relativ zu dem optischen Sensor zu bestimmen. Die Erfindung betrifft außerdem ein Verfahren zum Bestimmen einer Bewegung eines Codestreifens relativ zu einem optischen Sensor.

## Beschreibung

Die vorliegende Erfindung betrifft in einem ersten Gesichtspunkt ein System zum Bestimmen einer Bewegung eines Codestreifens relativ zu einem optischen Sensor nach dem Oberbegriff des Anspruchs 1. In einem zweiten Gesichtspunkt betrifft die Erfindung ein Verfahren zum Bestimmen einer Bewegung eines Codestreifens relativ zu einem optischen Sensor.

Ein gattungsgemäßes System zur Bestimmung einer Bewegung eines Codestreifens relativ zu einem optischen Sensor enthält zunächst den Codestreifen, der entlang einer Erstreckungsrichtung eine Vielzahl von Markern aufweist. Der optische Sensor des gattungsgemäßen Systems weist folgende Komponenten auf: mindestens ein Lichtsender zum Senden eines Sendelichtstrahls als mindestens ein Leuchtfleck auf den Codestreifen, mindestens einen Detektor zum Nachweisen von von dem Codestreifen infolge der Bestrahlung mit dem Leuchtfleck abgestrahltem Detektionslicht und eine Steuer- und Auswerteeinheit zum Ansteuern des mindestens einen Senders und zum Auswerten eines von dem mindestens einen Detektor nachgewiesenen Detektionssignals.

Ein gattungsgemäßes System ist beispielsweise beschrieben in EP3399336A1. Das dort beschriebene Verfahren dient primär der Bestimmung einer Position, wobei individuelle Marker erkannt werden müssen. Das ist vergleichsweise aufwendig.

Als eine Aufgabe der vorliegenden Erfindung kann angesehen werden, ein System und ein Verfahren zum Bestimmen einer Bewegung eines Codestreifens relativ zu einem optischen Sensor anzugeben, welches in der Durchführung besonders robust, wenig fehleranfällig und außerdem auch zur Erkennung von rascheren Relativbewegungen geeignet ist.

Diese Aufgabe wird durch das System mit den Merkmalen des Anspruchs 1 und durch das Verfahren mit den Merkmalen des Anspruchs 15 gelöst. Vorteilhafte Ausgestaltungen des erfindungsgemäßen Systems und bevorzugte Varianten des erfindungsgemäßen Verfahrens werden im Folgenden, insbesondere im Zusammenhang mit den abhängigen Ansprüchen und den Figuren erläutert.

Das System der oben angegebenen Art ist erfindungsgemäß dadurch weitergebildet, dass zum Ablenken des Sendelichtstrahls eine ansteuerbare Strahlablenkeinrichtung vorhanden ist und dass die Steuer- und Auswerteeinheit dazu eingerichtet ist, die Strahlablenkeinrichtung dergestalt anzusteuern, dass der Leuchtfleck auf dem Codestreifen in seiner Erstreckungsrichtung hin und her bewegt wird, und anhand einer durch die Marker bewirkten Zeitabhängigkeit des nachgewiesenen Detektionssignals eine Bewegung des Codestreifens relativ zu dem optischen Sensor zu bestimmen.

Bei dem erfindungsgemäßen Verfahren zum Bestimmen einer Bewegung eines Codestreifens relativ zu einem optischen Sensor werden folgende Verfahrensschritte durchgeführt: mit mindestens einem Sender des optischen Sensors wird Sendestrahlung auf den Codestreifen gestrahlt, der entlang einer Erstreckungsrichtung eine Vielzahl von Markern aufweist, wobei ein Leuchtfleck der Sendestrahlung auf dem Codestreifen entlang der Erstreckungsrichtung hin und her bewegt wird. Von dem Codestreifen infolge der Bestrahlung abgestrahltes Detektionslicht wird mit mindestens einem Detektor des optischen Sensors als mindestens ein Detektionssignal nachgewiesen und anhand einer durch die Marker bewirkten Zeitabhängigkeit des Detektionssignals oder der Detektionssignale wird eine Bewegung des Codestreifens relativ zu dem optischen Sensor bestimmt.

Das erfindungsgemäße System insbesondere die Steuer- und Auswerteeinheit können zur Durchführung des erfindungsgemäßen Verfahrens oder der hier beschriebenen Varianten davon eingerichtet sein.

Als eine Grundidee der Erfindung kann angesehen werden, einen Sendelichtstrahl, insbesondere einen Lichtfleck des Sendelichts, auf dem Codestreifen, der sich gegebenenfalls gegenüber dem optischen Sensor bewegt, über die Marker des Codestreifens hin und her zu bewegen und die dem Detektionslicht durch die Marker aufgeprägte Modulation zum Nachweis einer Relativbewegung zwischen dem Codestreifen und dem optischen Sensor zu verwenden.

Als ein wesentlicher Vorteil der Erfindung kann angesehen werden, dass das Verfahren apparativ wenig aufwendig und in der Durchführung wenig fehleranfällig ist. Es sind keine individuell zu erkennenden Marker notwendig, d. h. es können vergleichsweise einfache und kostengünstige Codestreifen verwendet werden.

Mit dem Begriff des Codestreifens, der eine Vielzahl von Markern aufweist, ist eine Anordnung von vielen, insbesondere identischen, Markern gemeint, die sich im wesentlichen in eine Raumrichtung, nämlich der Erstreckungsrichtung, erstreckt und in dieser Richtung viel weiter ausgedehnt ist als in den beiden anderen Raumdimensionen. Der Codestreifen kann in der Richtung senkrecht zu seiner Erstreckungsrichtung und senkrecht zu einer Erstreckungsrichtung der Marker vergleichsweise dünn sein. Beispielsweise kann der Codestreifen als, insbesondere aufgeklebter oder aufzuklebender, Filmstreifen verwirklicht sein. Der Codestreifen kann dann einfach an denjenigen Objekten, deren Bewegung überwacht werden soll, angebracht werden.

Die Eigenschaften des bei dem erfindungsgemäßen System zum Einsatz kommenden optischen Sensors werden im folgenden im Einzelnen erläutert. Der optische Sensor kann für sich genommen eine abgeschlossene Baueinheit sein und kann in einem Gehäuse untergebracht sein. Der optische Sensor kann Schnittstellen für Daten und/oder Energie aufweisen, beispielsweise eine Bus-Schnittstelle üblicher Bauart.

Mit einer Bewegung des Codestreifens relativ zu dem optischen Sensor sind insbesondere solche Bewegungen des Codestreifens gemeint, bei denen der Codestreifen sich im Wesentlichen quer zu einem Abstandsvektor zwischen dem Codestreifen und dem optischen Sensor bewegt. Es können aber auch Bewegungen des Codestreifens auf den optischen Sensor zu oder von dem optischen Sensor weg bestimmt werden.

Mit Bestimmung einer Bewegung des Codestreifens relativ zu dem optischen Sensor ist gemeint, dass mindestens eine Komponente eines Geschwindigkeitsvektors oder der Betrag eines Geschwindigkeitsvektors der Geschwindigkeit des Codestreifens relativ zu dem optischen Sensor bestimmt wird.

Die vorliegende Erfindung kann insbesondere in industriellen Umgebungen dort zum Einsatz kommen, wo die Bewegung eines Objekts überwacht werden soll, beispielsweise eines Fahrzeugs in einem Regalbedienungssystem.

Mit dem Begriff Licht wird im Rahmen der vorliegenden Anmeldung elektromagnetische Strahlung im sichtbaren Bereich und angrenzenden Bereichen, insbesondere im Infrarotbereich und UV-Bereich, bezeichnet. Weil im Hinblick auf die zu verwendenden Wellenlängen des Sendelichts Gestaltungsfreiheit besteht, kann für das Sendelicht eine Farbe so gewählt werden, dass das erfindungsgemäße System und andere optische Sensoren, die eventuell bereits in einer Umgebung eingesetzt werden, sich nicht gegenseitig stören.

Als Lichtsender können für den optischen Sensor solche Lichtquellen zum Einsatz kommen, die die gewünschte elektromagnetische Strahlung in der gewünschten Intensität bereitstellen. Bevorzugt werden Halbleiterkomponenten, beispielsweise Halbleiterlaser oder Leuchtdioden, verwendet. Beispielsweise kann ein Laserpointer als Lichtsender verwendet werden.

Als Leuchtfleck wird derjenige Bereich auf einem Codestreifen bezeichnet, der zu einem bestimmten Zeitpunkt mit dem Sendelicht bestrahlt wird. Der Leuchtfleck kann beispielsweise im Wesentlichen die Form einer Kreisscheibe oder einer ellipsenförmigen Scheibe aufweisen. Ein Durchmesser des Leuchtflecks wird bevorzugt kleiner gewählt als eine Ausdehnung der Marker in der Erstreckungsrichtung des Codestreifens. Damit wird gewährleistet, dass sich das Detektionssignal bei Überstreichen der Marker hinreichend stark ändert. Bevorzugt sind diejenigen Bereiche des Codestreifens zwischen zwei benachbarten Markern ebenfalls größer gewählt als die Ausdehnung des Leuchtflecks.

Bei dem von dem Codestreifen abgestrahltem Detektionslicht kann es sich um reflektiertes Licht, gestreutes, zurückgestrahltes, insbesondere zurückgestreutes Licht, grundsätzlich aber auch um transmittiertes Licht handeln. Es ist auch möglich, dass das Detektionslicht Fluoreszenzlicht ist, welches von fluoreszierenden Materialien, die in den Markern vorhanden sind, nach Anregung durch das Sendelicht abgestrahlt wird.

Als Detektor können jedwede Empfangseinrichtungen verwendet werden, welche für die elektromagnetische Strahlung in dem verwendeten Spektralbereich hinreichend empfindlich sind. Besonders bevorzugt werden Halbleiterkomponenten, beispielsweise Fotodioden mit oder ohne Optik, verwendet.

Als Steuer- und Auswerteeinheit kann bevorzugt eine programmierbare Komponente, beispielsweise ein Mikrocontroller, verwendet werden.

Damit das erfindungsgemäße System und das erfindungsgemäße Verfahren bestimmungsgemäß arbeiten können, ist es notwendig, dass der Codestreifen dergestalt relativ zu dem optischen Sensor angeordnet ist, dass der Sendelichtstrahl auf den Codestreifen und die Marker fällt und das mit der Strahlablenkeinrichtung eine Bewegung des Leuchtflecks hin und her entlang der Erstreckungsrichtung des Codestreifens möglich ist. Besonders bevorzugt sind der Codestreifen und der optische Sensor relativ zueinander dergestalt angeordnet, dass die Erstreckungsrichtung des Codestreifens quer und insbesondere senkrecht zu einer mittleren Senderichtung des Sendelichtstrahls orientiert ist.

An die Marker des Codestreifens ist eine Anforderung nur insoweit gestellt, als diese Marker im Vergleich zu Regionen des Codestreifens, wo sich kein Marker befindet, einkommendes Sendelicht verändern, beispielsweise durch Reflexion, Absorption, Transmission, Beugung und/oder Streuung oder Rückstreuung. Bevorzugt, sind die Marker dazu eingerichtet, einkommendes Sendelicht stark zurückzustreuen. Bei einer bevorzugten Variante des erfindungsgemäßen Systems sind die Marker des Codestreifens durch Streifen gebildet, insbesondere lichtstreuende Streifen, die auf dem Codestreifen quer, insbesondere senkrecht, zur Erstreckungsrichtung des Codestreifens angeordnet sind. Die Marker können bevorzugt in regelmäßigen oder gleichen Abständen zueinander angeordnet sein. Bevorzugt sind alle Marker identisch. Alternativ können mehrere Gruppen von jeweils von Markern vorhanden sein, wobei jede der Gruppen eine Vielzahl von identischen Markern enthält und wobei die Marker der unterschiedlichen Gruppen jeweils unterschiedliche Eigenschaften aufweisen können. Dieses wird weiter unten beschrieben.

Der gesamte Weg des Sendelichts von dem Lichtsender oder den Lichtsendern bis zum Codestreifen wird als Sendestrahlengang bezeichnet. Mit dem Begriff des Sendestrahlengangs werden auch alle strahlführenden oder strahlmanipulierenden Komponenten, beispielsweise Linsen, Spiegel, Prismen, Lichtleiter, Blenden, bezeichnet, über welche das Sendelicht auf dem Weg zum Codestreifen läuft und/oder welche das Sendelicht auf seinem Weg zum Codestreifen verändern.

Der gesamte Weg des Detektionslichts vom Codestreifen bis zu dem Detektor oder den Detektoren wird als Detektionsstrahlengang bezeichnet. Mit dem Begriff des Detektionsstrahlengangs werden auch alle strahlführenden oder strahlmanipulierenden Komponenten, beispielsweise Linsen, Spiegel, Prismen, Lichtleiter, Blenden, bezeichnet, über welche das Detektionslicht auf dem Weg zu dem Detektor oder den Detektoren läuft und/oder welche das Detektionslicht auf seinem Weg zu dem Detektor oder den Detektoren verändern. Komponenten, beispielsweise Spiegel, können sowohl Teil des Sendestrahlengangs als auch Teil des Detektionsstrahlengangs sein.

Beispielsweise ist bei einem bevorzugten Ausführungsbeispiel des Systems zum Trennen von Sendelicht und Detektionslicht ein Strahlteiler vorhanden, der im Sendestrahlengang strahlaufwärts von der Strahlablenkungseinrichtung angeordnet ist. Im Detektionsstrahlengang strahlabwärts von dem Strahlteiler kann dann vorteilhaft mindestens ein Detektor zum Nachweisen von Detektionslicht angeordnet sein. Mit den Richtungsangaben strahlaufwärts und strahlabwärts werden Positionen in einem Strahlengang bezeichnet in der Weise, dass der Strahl von strahlaufwärts gelegenen Punkten zu strahlabwärts gelegenen Punkten verläuft. Grundsätzlich kann im Detektionsstrahlengang auch eine separate Ablenkeinrichtung, beispielsweise ein separater verschwenkbarer Spiegel vorhanden sein, der Detektionslicht, welches vom jeweiligen Ort des Leuchtflecks kommt, auf einen Detektor leitet.

Wenn das Detektionslicht dieselbe Wellenlänge hat wie das Sendelicht, etwa bei einfacher Rückstreuung, kann zweckmäßig ein 50:50-Strahlteiler verwendet werden. Wenn das Detektionslicht beispielsweise rotverschobenes Fluoreszenzlicht ist, kann auch ein Farbteiler als Strahlteiler verwendet werden.

Alternativ oder ergänzend kann mindestens ein Detektor zum Nachweisen von Detektionslicht dergestalt angeordnet sein, dass von dem Codestreifen kommendes Detektionslicht auf direktem Weg zu diesem Detektor gelangen kann. Dieses ist insbesondere dann möglich, wenn das von dem Codestreifen abgestrahlte Detektionslicht vergleichsweise intensiv ist und über einen breiten Winkelbereich abgestrahlt wird.

Die Eigenschaft der Strahlablenkeinrichtung, ansteuerbar zu sein, bedeutet, dass je nach Ansteuerung ein einkommender Sendelichtstrahl von der Strahlablenkeinrichtung unterschiedlich abgelenkt, beispielsweise unterschiedlich verschwenkt wird.

Die Strahlablenkeinrichtung kann beispielsweise mindestens einen verschwenkbaren Spiegel aufweisen oder durch einen solchen verschwenkbaren Spiegel gebildet sein. Mindestens einer der verschwenkbaren Spiegel kann ein mikromechanischer Spiegel oder ein galvanometrischer Scanner-Spiegel sein.

Mindestens einer der verschwenkbaren Spiegel kann ein quasistatischer oder resonant schwingender Spiegel sein. Der verschwenkbare Spiegel kann auch ein Spiegelrad, wie es beispielsweise bei Barcode-Scannern verwendet wird, sein. Die Strahlablenkeinrichtung kann ein beugendes Element, insbesondere ein rotierendes oder verschwenkbares beugendes Element, beispielsweise ein Gitter, aufweisen oder durch ein solches Element verwirklicht sein.

Ergänzend oder alternativ ist es auch möglich, für die Strahlablenkeinrichtung Komponenten zu verwenden, bei denen keine mechanisch beweglichen Bestandteile vorhanden sind. Beispielsweise kann die Strahlablenkeinrichtung einen Spatial Light Modulator (Räumlicher Lichtmodulator, SLM) , einen AOTF (Acousto-Optical Tunable Filter) und/oder einen AOD (Acousto-Optical Deflector) aufweisen oder durch eine oder mehrere dieser Komponenten gebildet sein.

Bei einer einfachen Variante des erfindungsgemäßen Verfahrens wird der Leuchtfleck in der Ebene des Codestreifens entlang von einem linearen Weg hin und her bewegt. Abgesehen von der Bewegungsrichtung sind Hinweg und Rückweg des Leuchtflecks dann identisch. Für diese Variante des Verfahrens reicht es aus, wenn die Strahlablenkeinrichtung ein eindimensionales Verschwenken des Sendelichtstrahls ermöglicht. Bevorzugt sind der Codestreifen und der optische Sensor so zueinander angeordnet, dass der lineare Weg in Richtung der Erstreckungsrichtung des Codestreifens verläuft und insbesondere parallel zur Erstreckungsrichtung des Codestreifens ist.

Bei einer anderen bevorzugten Variante des erfindungsgemäßen Verfahrens wird der Leuchtfleck in der Ebene des Codestreifens in einer geschlossenen Kurve bewegt. Bei dieser Variante sind der Hinweg und Rückweg des Leuchtflecks nicht identisch. Beispielsweise kann die geschlossene Kurve des Leuchtflecks in der Ebene des Codestreifens kreis- oder ellipsenförmig sein. Bei diesen Verfahrensvarianten können insbesondere auch dann noch zuverlässige Messresultate erreicht werden, wenn der Codestreifen relativ zu dem optischen Sensor verkippt oder verdreht ist.

Zur Verwirklichung dieser Verfahrensvarianten ist die Strahlablenkeinrichtung bevorzugt zur zweidimensionalen Ablenkung des Sendestrahls eingerichtet. Beispielsweise kann ein zweidimensionaler mikromechanischer Spiegel oder ein zweidimensionaler galvanometrischer Scanner zum Einsatz kommen.

Grundsätzlich kommt es nicht darauf an, mit welcher Zeitabhängigkeit der Sendestrahl verschwenkt wird. Bei bevorzugten Ausführungsbeispielen weist mindestens eine der Geschwindigkeiten eines Phasenwinkels der Ablenkeinheit eine sinusförmige Zeitabhängigkeit auf. Bei einem zweidimensionalen Scanner kann die Geschwindigkeit des Phasenwinkels in x-Richtung und/oder die Geschwindigkeit des Phasenwinkels in y-Richtung eine sinusförmige Zeitabhängigkeit aufweisen.

Grundsätzlich kann die Erfindung mit Codestreifen verwirklicht werden, die nur einen einzigen Typ von Markern aufweisen, die beispielsweise in regelmäßigen Abständen auf dem Codestreifen angeordnet sind. Bei aufwändigeren Ausführungsbeispielen weist der Codestreifen unterschiedliche Marker auf, die jeweils unterschiedliche spektrale optische Eigenschaften, insbesondere eine jeweils spektral unterschiedliche Reflexion, Transmission, und/oder ein jeweils spektral unterschiedliches Streuvermögen, aufweisen. In diesem Zusammenhang kann auch bevorzugt sein, wenn mindestens ein erster Lichtsender und ein zweiter Lichtsender vorhanden sind, wobei ein Spektrum des Sendelichts des ersten Lichtsenders sich von dem Spektrum des Sendelichts des zweiten Lichtsenders unterscheidet. Zum Nachweis von unterschiedlichen spektralen Komponenten des Detektionslichts können zweckmäßig mehrere Detektoren vorhanden sein. Vor jedem der Detektoren kann ein Detektionsfilter angeordnet sein.

Zwei separate Meßkanäle zu verwenden, die bei verschiedenen Wellenlängen arbeiten und sich somit nicht gegenseitig stören können, kann zweckmäßig sein, wenn die Meßanordnung redundant aufgebaut werden soll, um ein erhöhtes SIL (Safety Integrity Level') zu erreichen. Die Messresultate der beiden spektral unabhängigen Anordnungen können miteinander verglichen und bei Inkonsistenzen kann ein sicherheitsgerichtetes Signal ausgegeben werden. Wenn beispielsweise Codestreifen verwendet werden, bei denen Marker für unterschiedliche Wellenlängen jeweils mit definierter Periodizität aufgebracht sind, liefert eine Messung für jeden spektralen Kanal ein Pulsmuster. Die Pulsmuster der beiden Kanäle weisen jeweils eine Frequenz auf, die durch die Periodizität der Anordnung der jeweiligen Marker auf dem Codestreifen definiert ist. Weil das Verhältnis der Frequenzen der beiden Kanäle durch die Periodizität des jeweiligen Codestreifens gegeben ist, muss dieses Verhältnis immer gleich sein. Wenn das nicht der Fall ist, wenn also die Messresultate eine Abweichung von diesem konstanten Frequenzverhältnis aufweisen, kann die Steuer- und Auswerteeinheit den Fehler erkennen und ein sicherheitsgerichtetes Signal, beispielsweise ein Abschaltsignal, ausgeben.

Durch die Verwendung von unterschiedlichen Markern und unterschiedlichen Farben des Sendelichts kann eine Redundanz der Messergebnisse erreicht und die Zuverlässigkeit der Meßresultate insgesamt kann gesteigert werden.

Bei einer besonders bevorzugten Ausgestaltung des erfindungsgemäßen Systems ist die Steuer- und Auswerteeinheit zum sicherheitsgerichteten Auswerten der Detektionssignale der Detektoren eingerichtet. Das erfindungsgemäße System kann dann für Anwendungen, bei denen an die Sicherheit hohe Anforderungen gestellt sind, eingesetzt werden.

Allgemein kann eine Geschwindigkeit des Codestreifens in Richtung seiner Erstreckungsrichtung bestimmt werden durch Auswerten einer Modulation, die dem Detektionssignal durch die Marker des Codestreifens aufgeprägt wird. Dabei geht man davon aus, dass ein Raster, in dem die Marker auf dem Codestreifen angeordnet sind, der Abstand des Codestreifens von dem optischen Sensor und die zeitlichen und geometrischen Parameter des Wegs, auf dem der Leuchtfleck auf dem Codestreifen hin und her bewegt wird, bekannt sind.

Mit dem Begriff der Modulation ist hier und im Folgenden insbesondere eine Modulationsfrequenz gemeint.

Wenn sich der Codestreifen relativ zu dem optischen Sensor bewegt, wird die dem Detektionssignal durch die Marker auf geprägte Modulation unterschiedlich sein, je nachdem ob sich der Leuchtfleck in Richtung der Bewegungsgeschwindigkeit des Codestreifens oder dazu entgegengesetzt bewegt. Bei einer bevorzugten Variante des erfindungsgemäßen Verfahrens wird ein Abstand des Codestreifens von dem optischen Sensor bestimmt durch Vergleich der Modulation des Detektionssignals bei Bewegung des Leuchtflecks in einer ersten Bewegungsrichtung mit der Modulation des Detektionssignals bei Bewegung des Leuchtflecks in einer zur ersten Bewegungsrichtung entgegengesetzten zweiten Bewegungsrichtung. Zur Auswertung der Modulationen kann das Detektionssignal beispielsweise einer Fourier-Analyse unterworfen werden.

Ergänzend oder alternativ kann bei einer weiteren bevorzugten Variante des erfindungsgemäßen Verfahrens eine Phasenverschiebung des Detektionssignals relativ zu einem Phasenwinkel der Strahlablenkeinrichtung bestimmt werden und aus der so bestimmten Phasenverschiebung kann ein Winkel einer Verdrehung des Codestreifens relativ zu dem optischen Sensor um eine Achse parallel zu einem Abstandsvektor zwischen dem optischen Sensor und dem Codestreifen bestimmt werden.

Ergänzend oder alternativ kann bei einer weiteren bevorzugten Variante des erfindungsgemäßen Verfahrens durch Vergleich einer durch den Codestreifen bewirkten Modulation des Detektionssignals mit derjenigen Modulation des Detektionssignals, die für eine kreisförmige Bewegung des Leuchtflecks in der Ebene des Codestreifens erwartet wird, eine tatsächliche Form der Bewegung des Leuchtflecks in der Ebene des Codestreifens bestimmt werden und durch Auswerten der tatsächlichen Form der Bewegung des Leuchtflecks auf dem Codestreifen kann sodann ein Verkippungswinkel des Codestreifens relativ zu einer Achse des Senders ermittelt werden.

Weitere Vorteile und Merkmale der Erfindung werden im Folgenden im Zusammenhang mit den Figuren erläutert. Darin zeigen:
- Figur 1:: ein erstes Ausführungsbeispiel eines erfindungsgemäßen Systems;
- Figuren 2 und 3:: schematische Ansichten zur Erläuterung der Grundprinzipien der vorliegenden Erfindung;
- Figur 4:: typische Situationen, die zu Meßungenauigkeiten führen können;
- Figur 5:: schematische Diagramme zur Verdeutlichung einer Variante des erfindungsgemäßen Verfahrens;
- Figuren 6 bis 9:: schematische Ansichten zur Erläuterung von Varianten des erfindungsgemäßen Verfahrens;
- Figur 10:: ein Beispiel eines Codestreifens für ein erfindungsgemäßes System zur Erläuterung in einer Variante des erfindungsgemäßen Verfahrens;
- Figuren 11 und 12:: weitere Varianten von Codestreifen für ein erfindungsgemäßes System und
- Figur 13:: ein weiteres Ausführungsbeispiel eines erfindungsgemäßen Systems.

Gleiche und gleichwirkende Komponenten sind in den Figuren in der Regel mit denselben Bezugszeichen gekennzeichnet.

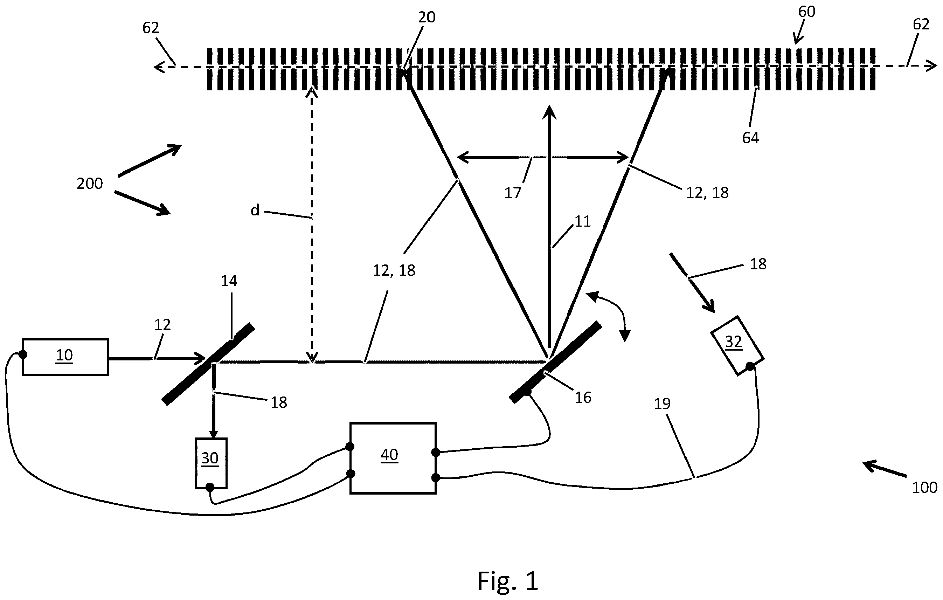

Figur 1 zeigt ein Ausführungsbeispiel eines erfindungsgemäßen Systems 200 mit einem optischen Sensor 100 und einem Codestreifen 60. Das System 200 dient zur Bestimmung einer Bewegung des Codestreifens 60 relativ zu dem optischen Sensor 100.

Der Codestreifen 60 weist eine Vielzahl von identischen Markern 64 auf, die entlang der Erstreckungsrichtung 62 jeweils äquidistant angeordnet sind und jeweils senkrecht zur Erstreckungsrichtung 62 orientiert sind.

Der optische Sensor 100 weist erfindungsgemäß einen Lichtsender 10 zum Senden eines Sendelichtstrahls 12 auf. In dem in Figur 1 dargestellten Ausführungsbeispiel tritt der Sendelichtstrahl 12 zunächst mindestens teilweise durch einen Strahlteiler 14 und wird dann durch einen ansteuerbar verschwenkbaren Spiegel, durch den eine ansteuerbare Strahlablenkeinrichtung 16 verwirklicht ist, als ein Leuchtfleck 20 auf den Codestreifen 60 geleitet.

Zum Nachweisen von von dem Codestreifen 60 infolge der Bestrahlung mit dem Leuchtfleck 20 abgestrahltem Detektionslicht 18 ist ein Detektor 30 vorhanden. Detektionslicht 18 gelangt über den verschwenkbaren Spiegel 16 zurück auf den Strahlteiler 14 und wird von diesem mindestens teilweise auf den Detektor 30 reflektiert. Bei dem in Figur 1 dargestellten Ausführungsbeispiel ist außerdem ein weiterer Detektor 32 vorhanden, der benachbart zu dem verschwenkbaren Spiegel 16 so angeordnet ist, dass von dem Codestreifen 60 kommendes Detektionslicht 18 diesen Detektor 32 auf direktem Weg erreichen kann.

Zum Ansteuern des Lichtsenders 10 und der Strahlablenkungseinrichtung 16 ist eine Steuer- und Auswerteeinheit 40, beispielsweise ein programmierbarer Mikrocontroller, vorhanden. Die Steuer- und Auswerteeinheit 40 dient außerdem zum Auswerten von Detektionssignalen 19, die von dem Detektor 30 und/oder von dem Detektor 32 geliefert werden.

Figur 1 zeigt schematisch, dass mit der ansteuerbaren Strahlablenkeinrichtung 16 durch Verschwenken des Sendelichtstrahls 12 über einen Winkelhub 17 der Leuchtfleck 20 auf dem Codestreifen 60 in der Erstreckungsrichtung 62 des Codestreifens 60 hin und her bewegt werden kann.

Die Komponenten Lichtsender 10, Strahlteiler 14, Strahlablenkeinrichtung 16, Detektoren 30, 32 und Steuer- und Auswerteeinheit 40 sind zweckmäßig in einem Gehäuse untergebracht, das in Figur 1 nicht dargestellt ist.

Der Codestreifen 60 und der optische Sensor 100 sind relativ zueinander dergestalt in einem Abstand d angeordnet, dass die Erstreckungsrichtung 62 des Codestreifens quer zu einer mittleren Senderichtung 11 des Sendelichtstrahls 12 orientiert ist. Die mittlere Senderichtung 11 des Sendelichtstrahls 12, parallel zur Richtung des mit dem Buchstaben d bezeichneten Abstands verläuft, kann auch als Achse des Senders bezeichnet werden.

Die Steuer- und Auswerteeinheit ist erfindungsgemäß dazu eingerichtet, die Strahlablenkeinrichtung 16 dergestalt anzusteuern, dass der Leuchtfleck 20 auf dem Codestreifen 60 in seiner Erstreckungsrichtung 62 hin und her bewegt wird, und anhand einer durch die Marker 64 bewirkten Zeitabhängigkeit des nachgewiesenen Detektionssignals 19 eine Bewegung des Codestreifens 60 relativ zu dem optischen Sensor 100 zu bestimmen.

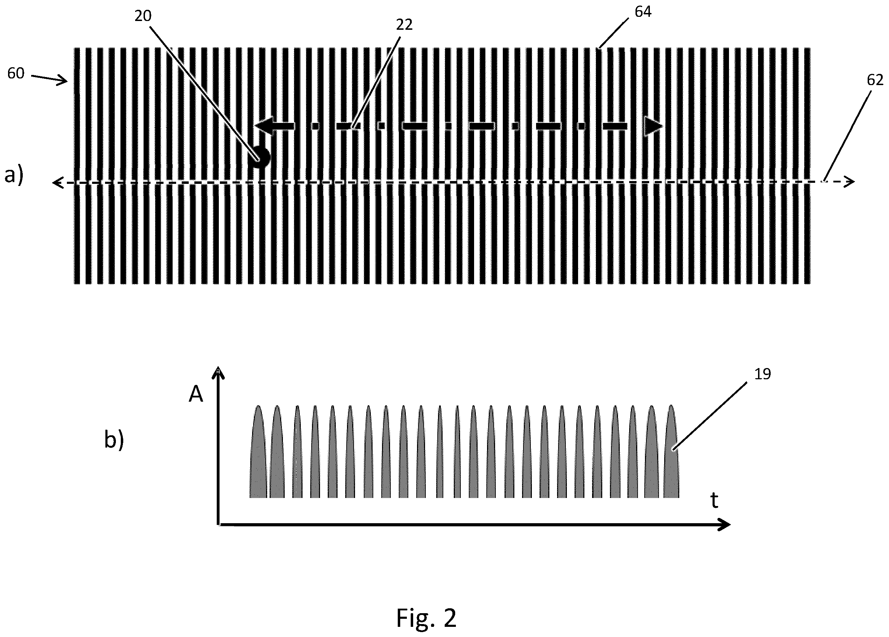

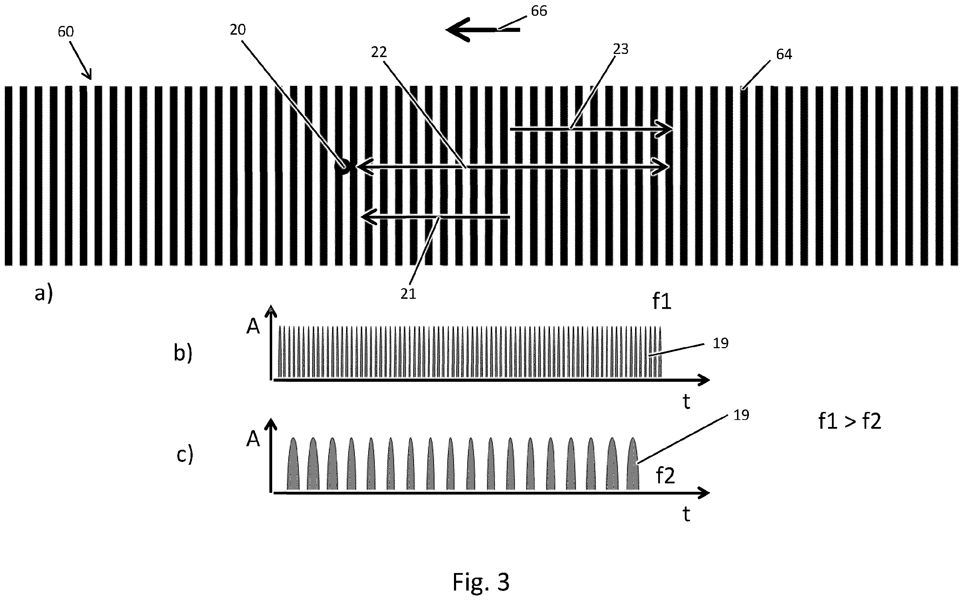

Das der vorliegenden Erfindung zugrundeliegende technische Prinzip wird im Zusammenhang mit den Figuren 2 und 3 erläutert. Figur 2 veranschaulicht die Situation, in welcher der Codestreifen 60 relativ zu dem optischen Sensor 100 ruht, wohingegen sich der Codestreifen 60 in der in Figur 3 gezeigten Situation relativ zu dem optischen Sensor 100 mit einer durch den Pfeil 66 veranschaulichten Geschwindigkeit bewegt.

In Figur 2a) veranschaulicht der Doppelpfeil 22 schematisch, wie der Leuchtfleck 20 parallel zur Erstreckungsrichtung 62 des Codestreifens 60 linear über den Codestreifen 60 hin und her bewegt wird. Die Ausdehnung des Leuchtflecks 20 ist in Wirklichkeit deutlich kleiner als in Figur 2 und 3 dargestellt, nämlich bevorzugt kleiner als die Ausdehnung der Marker 62 in der Erstreckungsrichtung 62 und auch kleiner als die Abstände zwischen den Markern 64.

Die Marker 64 weisen im Vergleich zu den Zwischenräumen unterschiedliche optische Eigenschaften auf. In dem gezeigten Beispiel streuen die Marker 64 das Sendelicht 12 im Vergleich zu den Zwischenräumen viel stärker zurück, sodass man insgesamt einen guten Modulationskontrast erhält. Die umgekehrte Situation, in der das Sendelicht 12 von den Zwischenräumen stark und von den Markern 64 nur schwach zurückgestreut wird, ist auch möglich.

Detektionslicht 18, welches von dem Codestreifen 60 infolge der Bestrahlung mit dem Leuchtfleck 20, der entlang von dem linearen Weg 22 über den Codestreifen 60 hin und her bewegt wird, zurückgestrahlt wird, wird sodann mit dem Detektor 30 und/oder dem Detektor 32 nachgewiesen. Ein Detektionssignal 19 weist dann den in Figur 2b) schematisch über die Zeit dargestellten Amplitudenverlauf auf. Wenn sich der Leuchtfleck 20 auf einem der Marker 64 befindet, wird das Sendelicht 12 stark zurückgestreut und die Amplitude des Detektionslichts 19 ist somit hoch. Wenn sich der Leuchtfleck 20 andererseits im wesentlichen zwischen zwei Markern 64 befindet, wird nur wenig Detektionslicht 18 zurückgestreut und die Amplitude des Detektionssignals 19 ist klein.

Wichtig für eine ordnungsgemäße Auswertung ist, dass die Position des Leuchtflecks 20 auf dem Codestreifen 60 zu jedem Zeitpunkt bekannt ist. Dazu müssen insbesondere Winkelhub 17 und Winkelgeschwindigkeit der Ablenkeinrichtung 16 bekannt sein. Weiterhin sollte eine Grenzfrequenz der verwendeten Detektoren hoch genug sein, um das modulierte Detektionslicht korrekt in ein Detektionssignal 19 umzusetzen. Schließlich sollte der Lichtsender 10 stark genug sein, um auch bei größeren Abständen ein hinreichend intensives Detektionssignal 19 zu erzeugen.

Die Frequenz des Amplitudenmusters in Figur 2b) hängt im Einzelnen ab von den Abständen der Marker 64 auf dem Codestreifen 60, der Bewegungsgeschwindigkeit des Leuchtflecks 20 auf dem Codestreifen 60 und somit von der Bewegungsgeschwindigkeit des verschwenkbaren Spiegels 16 und schließlich auch vom Abstand d zwischen dem optischen Sensor 100 und dem Codestreifen 60 (siehe Figur 1). Mit Ausnahme des Abstands d können diese Größen als bekannt gelten. Durch Auswerten der Frequenz des Amplitudenmusters in Figur 2b) kann somit der Abstand d des optischen Sensors 100 zu dem Codestreifen 60 bestimmt werden.

Figur 3 veranschaulicht sodann die Anordnung der Figur 2 in einer Situation, in der sich der Codestreifen 60 relativ zu dem optischen Sensor 100 mit einer Geschwindigkeit 66 bewegt. Die Bewegung des Codestreifens 60 führt dazu, dass die gemessenen zeitlichen Amplitudenverläufe des Detektionssignals 19 unterschiedlich sind, je nachdem, ob sich der Leuchtfleck 20 in Richtung der Relativgeschwindigkeit 66, also in Richtung des Pfeils 21 oder entgegengesetzt dazu, also in Richtung des Pfeils 23 bewegt. Es wird angenommen, dass die Bewegungsgeschwindigkeit 21 des Leuchtflecks 20 in Richtung der Relativgeschwindigkeit 66 größer ist als die Relativgeschwindigkeit 66.

Wenn sich der Leuchtfleck 20 nun entgegengesetzt zu der Relativgeschwindigkeit 66 zwischen dem Codestreifen 60 und dem optischen Sensor 100 bewegt (Pfeil 23), ist die Anzahl der pro Zeiteinheit von dem Leuchtfleck 20 überstrichenen Marker 64 im Vergleich zur Situation der Figur 2, wo der optische Sensor 100 und der Codestreifen 60 relativ zueinander ruhen, erhöht. Dieses ist vergleichbar dem Dopplereffekt in der Akustik. Entsprechend wird, wie in Figur 3b) gezeigt, ein Amplitudenmuster mit im Vergleich zu Figur 2 erhöhter Frequenz f1 gemessen.

Wenn sich der Leuchtfleck 20 in Richtung der Relativgeschwindigkeit 66 zwischen dem Codestreifen 60 und dem optischen Sensor bewegt (Pfeil 21), ist die Anzahl der pro Zeiteinheit von dem Leuchtfleck 20 überstrichenen Marker 64 im Vergleich zu Figur 2 reduziert. Man misst dann das in Figur 3c) dargestellte Amplitudenmuster mit im Vergleich zu Figur 2 reduzierter Frequenz f2.

Bei bekanntem Abstand d kann aus jeder einzelnen der Frequenzen f1 und f2 dann die Geschwindigkeit 66 bestimmt werden. Bei unbekanntem Abstand d kann aus dem Verhältnis von f1 und f2 der Abstand d bestimmt werden.

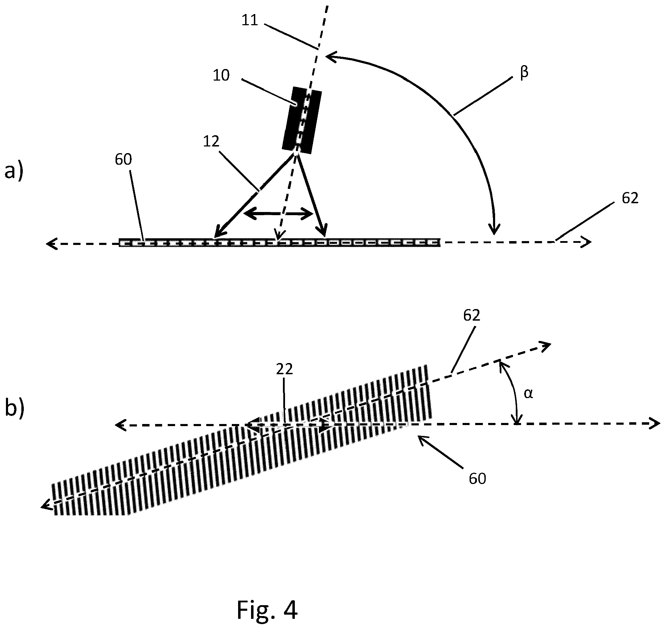

Figur 4 veranschaulicht zwei Situationen, die zu Veränderungen oder Verfälschungen der Messresultate führen können. Figur 4 a) zeigt schematisch eine Situation, in der eine Achse 11 des Lichtsenders 10, die insbesondere mit einer mittleren Senderichtung des Sendestrahls 12 zusammenfallen kann, relativ zu einer Flächennormale des Codestreifens 60 verkippt ist. Diese Verkippung, also die Abweichung des Winkels β von 90 Grad, führt wegen der veränderten Winkel, die von dem Sendestrahl 12 jeweils zwischen den einzelnen Markern 64 zu überstreichen sind, zu veränderten oder verfälschten Messergebnissen.

Figur 4b) veranschaulicht eine Situation, in welcher der Codestreifen 60, mithin seine Erstreckungsrichtung 62, relativ zu dem linearen Weg 22, über den der Leuchtfleck 20 hin und her bewegt wird, um einen Winkel α verdreht ist. Die Drehung um den Winkel α bezieht sich auf eine Achse, die parallel ist zu einem Abstandsvektor zwischen dem optischen Sensor 100 und dem Codestreifen 60. Die Marker des Codestreifens 60 sind in Figur 4b) nur schematisch gezeigt; in Wirklichkeit erstrecken sich die Marker 64, wie in Figur 1 dargestellt, jeweils senkrecht zur Erstreckungsrichtung 62 des Codestreifens 60. Diese Verkippung um den Winkel α führt auch zu verfälschten Messergebnissen. Es ist unmittelbar einsichtig, dass bei ansonsten unveränderten Parametern der Messanordnung, insbesondere bei unverändertem linearen Weg 22 des Leuchtflecks 20, die Zahl der von dem Leuchtfleck 20 insgesamt überstrichenen Marker 64 und damit auch die Frequenz des gemessenen Amplitudenmusters reduziert ist.

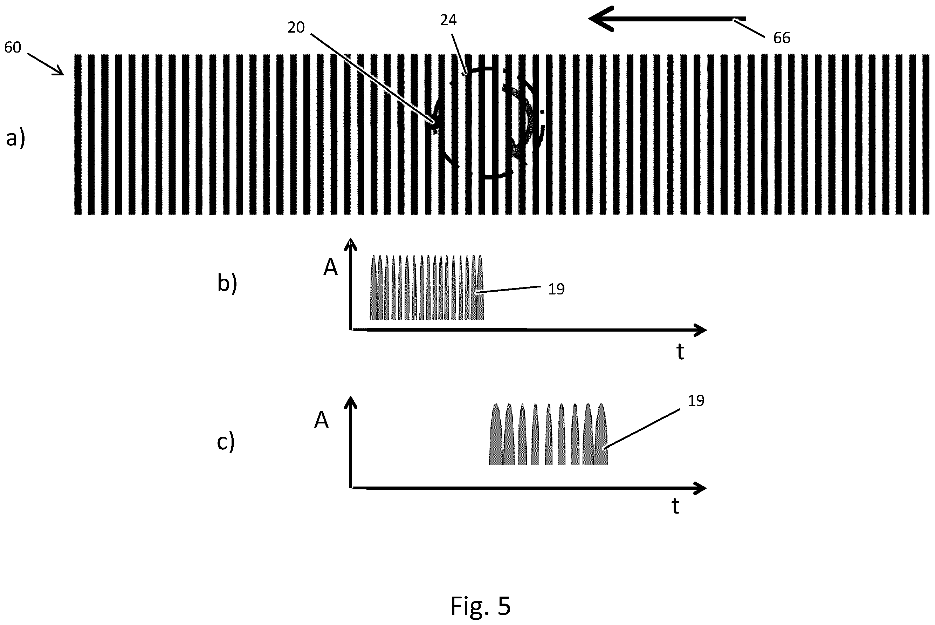

Die in Figur 4a) und 4b) gezeigten Fehlstellungen können aus den Messdaten diagnostiziert und kompensiert werden, wenn der Leuchtfleck 20 anstatt über einen linearen Weg 22, bei dem Hin- und Rückweg identisch sind, in der Ebene des Codestreifens 60 in einer geschlossenen Kurve, insbesondere mit Kreis oder Ellipsenform, bewegt wird. Dieses wird mit Bezug auf die Figuren 5 bis 9 erläutert.

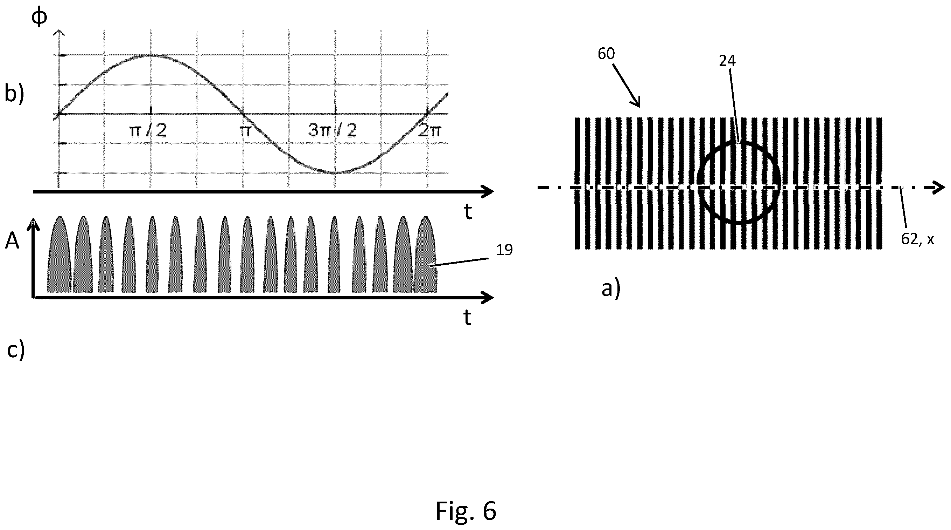

Mit Ausnahme des Wegs, über den der Leuchtfleck 20 bewegt wird, entspricht die apparative Situation der Figur 5 derjenigen der Figur 3 und die apparative Situation der Figur 6 entspricht derjenigen der Figur 2. Das heißt, dass der Sender 10 weder, wie in Figur 4a), relativ zu dem Codestreifen 60 verkippt, noch der Codestreifen 60, wie in Figur 4b), relativ zu dem optischen Sensor 100 verdreht ist.

In Figur 5 wird der Leuchtfleck 20 im Uhrzeigersinn auf einer kreisförmigen geschlossenen Kurve 24 bewegt. Zur Verwirklichung von solchen zweidimensionalen Kurven ist die Strahlablenkeinrichtung 16 zweckmäßig zum zweidimensionalen Ablenken des Sendestrahls 12, beispielsweise mit einem zweidimensionalen Scanner, eingerichtet. Figur 5b) zeigt das Detektionssignal 19, welches man erhält, solange die zur Erstreckungsrichtung 62 parallele Komponente der Geschwindigkeit des Leuchtflecks 20 entgegengesetzt ist zur Geschwindigkeit 66. Dieses entspricht qualitativ der Figur 3b). Wenn sodann in der unteren Hälfte des Wegs 24 die zur Erstreckungsrichtung 62 parallele Komponente der Geschwindigkeit des Leuchtflecks 20 in dieselbe Richtung wie die Geschwindigkeit 66 weist, misst man das in Figur 5c) gezeigte Amplitudenmuster mit erwartungsgemäß reduzierter Frequenz. Dieses entspricht qualitativ der Figur 3c).

Figur 6 veranschaulicht eine Situation, in welcher der Codestreifen 60 relativ zu dem optischen Sensor 100 ruht. In Figur 6a) ist wieder eine kreisförmige geschlossene Kurve 24 des Leuchtflecks 20 dargestellt. Figur 6b) zeigt den Phasenwinkel Φ der Kreisbewegung über die Zeit. Figur 6c) zeigt sodann das gemessene Detektionssignal 19, das qualitativ demjenigen der Figur 2b) entspricht.

Wegen der kreisförmigen Bewegung des Leuchtflecks 20 und dem dadurch bewirkten unterschiedlichen zeitlichen Überstreichen der Marker 64 durch den Leuchtfleck 20 weichen die Amplitudenmuster der Figuren 5b), 5c), 6b) im Einzelnen aber von denjenigen der Figuren 3b), 3c) beziehungsweise 2b) ab.

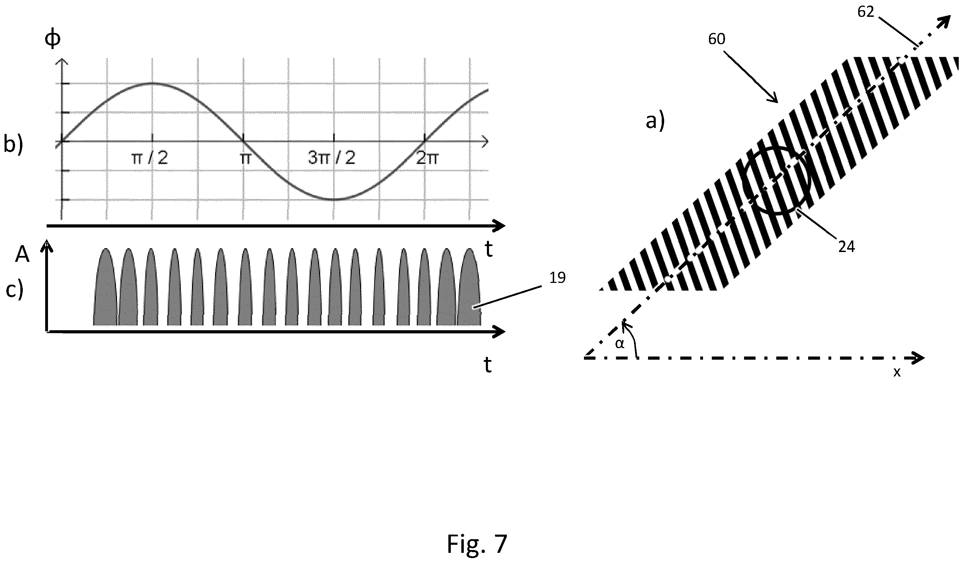

Die in Figur 7 veranschaulichte Situation unterscheidet sich insoweit von derjenigen der Figur 6, als in Figur 7, wie in Figur 4b) der Codestreifen 60 relativ zu dem optischen Sensor 100 verdreht ist. Dieses ist in Figur 7a) dargestellt, wo die Erstreckungsrichtung 62 relativ zu einer x-Achse um einen Winkel α verdreht ist. Auch hier ist zu beachten, dass die Marker des Codestreifens 60 nur schematisch gezeigt sind und sich in Wirklichkeit senkrecht zur optischen Achse 62 erstrecken. Die x-Achse ist starr an den optischen Sensor 100 gekoppelt.

Die Verdrehung des Codestreifens 62 relativ zur x-Achse führt dazu, dass das in Figur 7c) dargestellte Amplitudenmuster des Detektionssignals 19 phasenverschoben ist im Vergleich zu demjenigen der Figur 6c), die der Situation entspricht, wo der Codestreifen 60 relativ zu x-Achse nicht verdreht ist und die Erstreckungsrichtung 62 mit der x-Achse zusammenfällt: Der Verlauf des Detektionssignals 19 in Figur 7c) ist im Vergleich zu Figur 6c) etwa um π/4 verschoben. Diese Phasenverschiebung kann gemessen werden und aus dieser Phasenverschiebung kann der Winkel α der Verdrehung des Codestreifens relativ zu dem optischen Sensor 100 bestimmt werden.

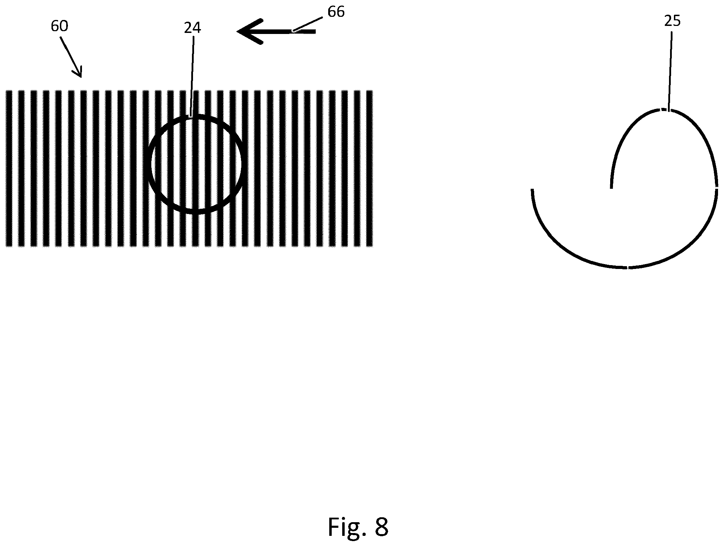

Figur 8 veranschaulicht wieder eine Situation wie in Figur 5, in der sich der Codestreifen 60 mit einer Geschwindigkeit 66 relativ zu dem optischen Sensor 100 bewegt und bei der die Achse 11 des Senders 10 orthogonal zu dem Codestreifen 60 ausgerichtet ist, d. h. der Winkel β (siehe Figur 4a) beträgt 90°.

Veranschaulicht ist in Figur 8 auch ein kreisförmiger Weg 24, über den der Leuchtfleck 20 in der Ebene des Codestreifens geführt wird. Mit dem Bezugszeichen 25 ist in Figur 8 außerdem der Pfad der von dem Leuchtfleck 20 auf dem Codestreifen 60 im zeitlichen Verlauf beleuchteten Punkte dargestellt.

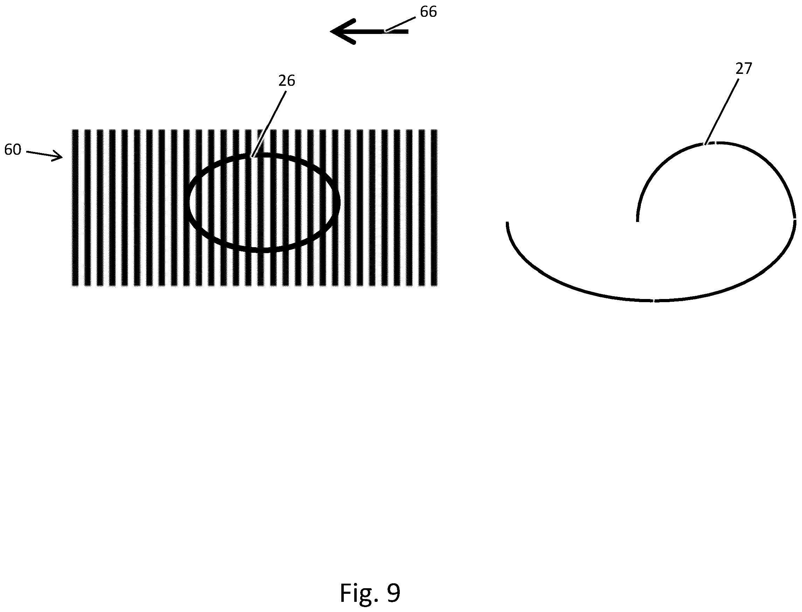

Die in Figur 9 dargestellte Situation unterscheidet sich von derjenigen der Figur 8 insoweit, als die Achse 11 des Senders 10 relativ zu dem Codestreifen 60, so wie in Figur 4a) veranschaulicht, verkippt ist. Der Winkel β (siehe Figur 4a) weicht also von 90° ab. Diese Verkippung führt dazu, dass der Leuchtfleck 20 bei ansonsten unverändertem Betrieb der Strahlablenkeinrichtung 16 in der Ebene des Codestreifens 60 nunmehr nicht mehr in einem kreisförmigen, sondern in einen ellipsenförmigem Weg bewegt wird. Entsprechend verändert ist auch der mit dem Bezugszeichen 27 gekennzeichnete Pfad derjenigen Punkte, die von dem Leuchtfleck 20 auf dem Codestreifen 60 im zeitlichen Verlauf beleuchtet werden.

Bei einer bevorzugten Variante des erfindungsgemäßen Verfahrens kann nun durch Vergleich einer durch den Codestreifen 60 bewirkten Modulation des Detektionssignals 19 bei der Situation der Figur 9 mit derjenigen Modulation des Detektionssignals 19, die für eine kreisförmige Bewegung des Leuchtflecks 20 in der Ebene des Codestreifens 60 erwartet wird (Figur 8), eine tatsächliche Form der Bewegung des Leuchtflecks 20 in der Ebene des Codestreifens 60 bestimmt werden. Durch Auswerten der tatsächlichen Form der Bewegung des Leuchtflecks 20 auf dem Codestreifen 60 kann sodann der Winkel β und damit der Verkippungswinkel des Codestreifens 60 relativ zu einer Achse 11 des Senders 10 ermittelt werden.

Eventuell kann es schwierig sein, eine Bewegung des Codestreifens 60 zu detektieren, wenn diese sehr langsam ist und die im Zusammenhang mit Figur 3 beschriebenen Effekte sehr gering sind, wenn, mit anderen Worten, die Frequenzen f1 und f2 messtechnisch nicht unterscheidbar sind.

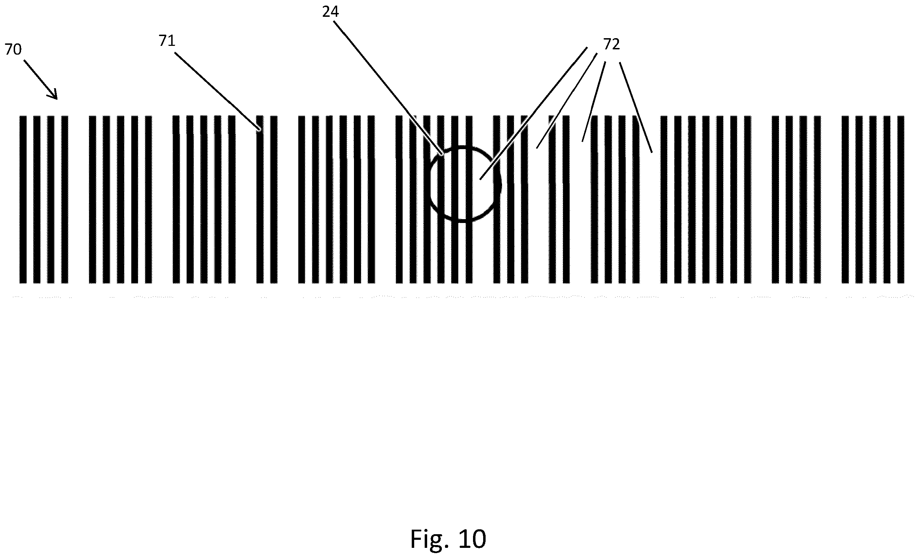

In solchen Situationen kann es von Vorteil sein, einen Codestreifen zu verwenden, in den zusätzliche Marker oder Fehlstellen von Markern eingebracht sind. Ein Beispiel dafür zeigt Figur 10. Dort ein Codestreifen 70 mit einer Vielzahl von identischen Markern 71 gezeigt, wobei sich aber an manchen Positionen 72 kein Marker 71 befindet. Eine von diesen Fehlstellen 72 bewirkte Struktur im Muster des zurückgestrahltes Detektionslichts 19 kann zeitlich verfolgt werden und daraus kann eine Geschwindigkeit des Codebands 70 bestimmt werden.

Alternativ oder ergänzend kann bei langsamer Bewegung des Codestreifens 60 auch die Rotationsfrequenz, d.h., die Frequenz, mit der der Leuchtfleck eine geschlossene Kurve, etwa eine kreis- oder ellipsenförmige Kurve durchläuft, oder, bei linearem Weg, die Schwingungsfrequenz, variiert werden, insbesondere erniedrigt werden.

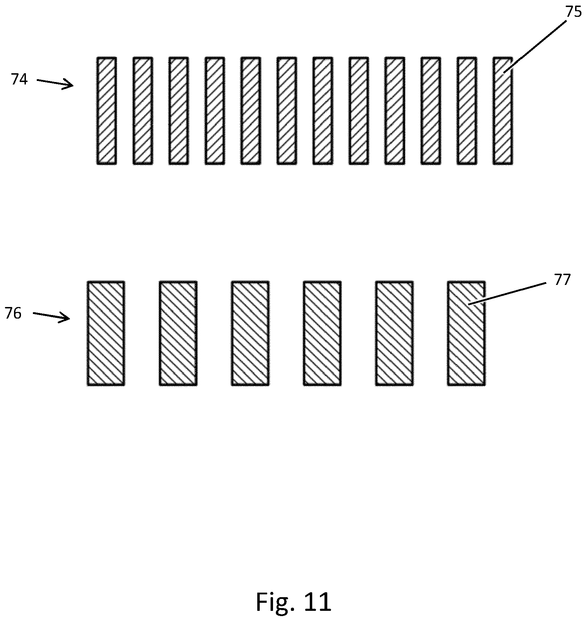

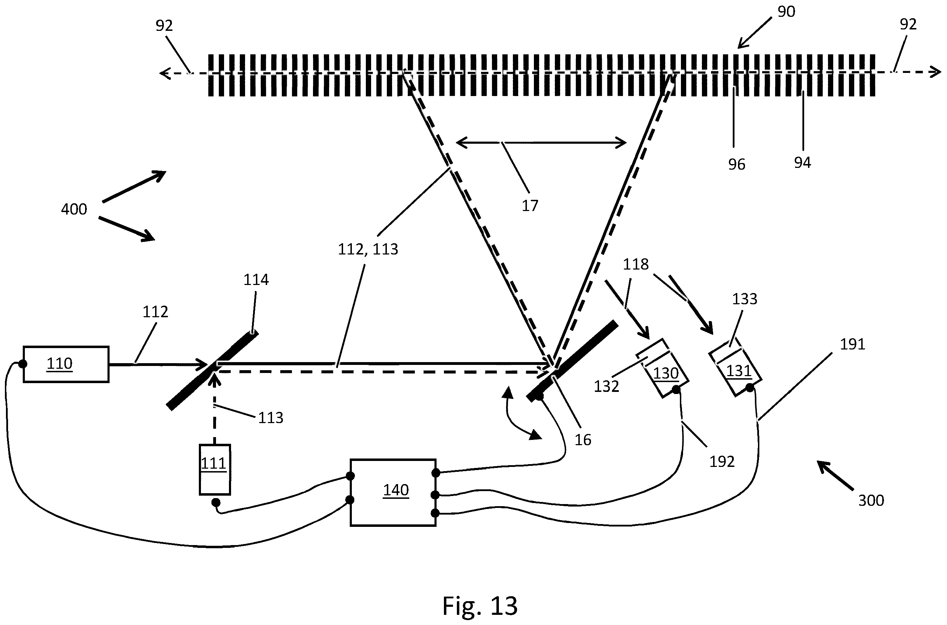

In Figur 11 sind zwei weitere Beispiele für Codestreifen 74, 76 dargestellt. Der Codestreifen 74 weist in jeweils gleichen Abständen angeordnete identische Marker 75 auf, die zur Abtastung mit Laserlicht im roten Spektralbereich ausgebildet sein können. und von denen nur einer mit einem Bezugszeichen versehen ist. Der Codestreifen 76 weist ebenfalls in jeweils gleichen Abständen angeordnete identische Marker 77 auf, die zur Abtastung mit einem UV-Laser ausgebildet sein können. Von den Markern 75 und 77 ist jeweils nur einer mit einem Bezugszeichen versehen. Die Anzahl der Marker 75 pro Längeneinheit bei dem Codestreifen 74 ist doppelt so groß wie die Anzahl der Marker 77 pro Längeneinheit bei dem Codestreifen 76. Die Codestreifen 74 und 76 können überlagert werden und gleichzeitig mit einem roten Laser und einem UV-Laser abgetastet werden. Dieses kann beispielsweise mit einem System der in Figur 13 gezeigten Art durchgeführt werden.

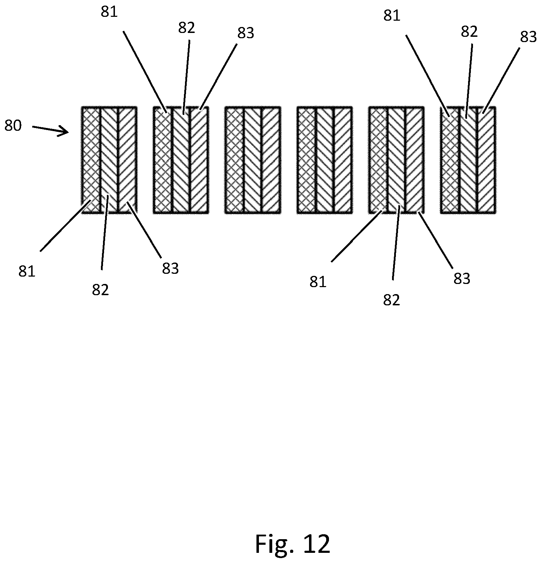

Figur 12 zeigt ein weiteres Beispiel eines Codestreifens 80 mit drei verschiedenen Markern 81, 82, 83, die jeweils unterschiedliche spektrale Eigenschaften aufweisen. Beispielsweise können die Marker 81, 82, 83 jeweils unterschiedliche Farben aufweisen und können jeweils mit geeigneten Lasern abgetastet werden. Von den Markern Marker 81, 82, 83 sind jeweils nur einige mit einem Bezugszeichen versehen. Gleiche Marker sind hier mit gleichen Schraffuren dargestellt.

Figur 13 zeigt ein Ausführungsbeispiel eines erfindungsgemäßen Systems 400 mit einem optischen Sensor 300 und einem Codestreifen 90. Der optische Sensor 300 unterscheidet sich von dem in Figur 1 dargestellten optischen Sensor 100 zunächst dadurch, dass anstelle des Lichtsenders 10 ein erster Lichtsender 110 zum Bereitstellen von Sendelicht 112 mit einem ersten Wellenlängenlängenspektrum, insbesondere einer ersten Wellenlänge, und ein zweiter Lichtsender 111 zum Bereitstellen von Sendelicht 113 mit einem zweiten Wellenlängenlängenspektrum, insbesondere einer zweiten Wellenlänge 113, vorhanden sind.

Das Sendelicht 112 des ersten Lichtsenders 110 und das Sendelicht 113 des zweiten Lichtsenders 111 werden mit einem Strahlvereiniger 114 vereinigt und das Sendelicht 112, 113 gelangt dann, wie bei Figur 1, über den ansteuerbar verschwenkbaren Spiegel 16 auf den Codestreifen 90. Der Codestreifen 90 weist entlang seiner Erstreckungsrichtung 92 Marker 94 und Marker 96 auf, von denen jeweils nur einer mit einem Bezugszeichen versehen ist.

Die Marker 94 sind zur Abtastung mit dem Sendelicht 112 mit dem ersten Wellenlängenlängenspektrum ausgebildet und die Marker 96 sind zur Abtastung mit dem Sendelicht 113 mit dem zweiten Wellenlängenlängenspektrum ausgebildet.

Zum Nachweisen von von dem Codestreifen 90 infolge der Bestrahlung mit dem Sendelicht 112, 113 zurückgestrahltem Detektionslicht 118 sind ein erster Detektor 130 und ein zweiter Detektor 131 vorhanden, die beide so angeordnet ist, dass von dem Codestreifen 90 kommendes Detektionslicht 118 auf direktem Weg zu diesen Detektoren 130, 131 gelangen kann. Bevorzugt sind die beiden Detektoren 131 und 130 möglichst nahe am Drehzentrum des verschwenkbaren Spiegel 16 angebracht.

Der erste Detektor 130 ist zum Nachweisen des von den Markern 94 zurückgestrahlten Detektionslichts, also des zurückgestrahlten Sendelichts 112 mit dem ersten Wellenlängenlängenspektrum, eingerichtet und weist dazu einen geeigneten Detektionsfilter 132 auf, der im Wesentlichen nur das Sendelicht 112 mit dem ersten Wellenlängenlängenspektrum durchlässt.

Der zweite Detektor 131 ist zum Nachweisen des von den Markern 96 zurückgestrahlten Detektionslichts, also des zurückgestrahlten Sendelichts 113 mit dem zweiten Wellenlängenlängenspektrum, eingerichtet und weist dazu einen geeigneten Detektionsfilter 133 auf, der im Wesentlichen nur das Sendelicht 113 mit dem zweiten Wellenlängenlängenspektrum durchlässt.

Zum Ansteuern der ersten Lichtsenders 110 und des zweiten Lichtsenders 111 und der Strahlablenkeinrichtung 16 und zum Auswerten des Detektionssignals 192 des ersten Detektors 130 und des Detektionssignals 191 des zweiten Detektors 131 ist eine Steuer- und Auswerteeinheit 140 vorhanden. Die Steuer- und Auswerteeinheit 140 kann zum sicherheitsgerichteten Auswerten der Detektionssignale der Detektoren 130, 131 eingerichtet sein.

Ein Codestreifen 90, der für den Einsatz bei dem System 300 geeignet ist, kann beispielsweise wie folgt hergestellt werden. Zunächst werden die Marker 94 mit einer ersten Farbe, beispielsweise rot, aufgedruckt, die möglichst wenig von der zweiten Farbe, beispielsweise UV-Licht, absorbiert. Anschließend können die Marker 96 für UV-Licht mit einer Farbe gedruckt werden, welche möglichst wenig rotes Licht absorbiert. Der so hergestellte Codestreifen kann für die beiden Wellenlängen wie zwei unabhängige Codebänder verwendet werden.

Bei einer alternativen Anordnung wird nur ein einziger Detektor verwendet und die beiden Lichtsender 110 und 111 werden rasch alternierend geschaltet. Anstelle der Anordnung mit dem Lichtsender 110, dem Lichtsender 111 und dem Strahlvereiniger 114 kann auch ein Lichtsender verwendet werden, der alle gewünschten Wellenlängen gleichzeitig aussendet.

### Bezugszeichenliste

- 10: Lichtsender
- 11: Achse des Lichtsenders 10, mittlere Senderichtung des Sendestrahls 12
- 12: Sendelicht, Sendelichtstrahl
- 14: Strahlteiler, halbdurchlässiger Spiegel
- 16: ansteuerbare Strahlablenkeinrichtung / ansteuerbar schwenkbarer Spiegel
- 17: Winkelhub des Sendestrahls 12
- 18: Detektionslicht, von Codeband 60 zurückgestrahltes Sendelicht 12
- 19: von dem Detektor 30, 32 nachgewiesenes Detektionssignal
- 20: Lichtfleck des Sendelichts 12 auf dem Codestreifen 60
- 21: Bewegungsrichtung des Leuchtflecks 20 (Hinrichtung)
- 22: Bewegungsrichtung des Leuchtflecks 20 / linearer Weg des Leuchtflecks 20
- 23: Bewegungsrichtung des Leuchtflecks 20 (Rückrichtung)
- 24: kreisförmige geschlossene Kurve des Leuchtflecks in der Ebene des Codestreifens 20
- 25: tatsächlicher Pfad des Leuchtflecks 20 auf dem Codestreifen 60 bei ideal kreisförmiger Kurve in der Ebene des Codestreifens 60
- 26: ellipsenförmige geschlossene Kurve des Leuchtflecks in der Ebene des Codestreifens 60
- 27: tatsächlicher Pfad des Leuchtflecks 20 auf dem Codestreifen 60 bei ellipsenförmiger Kurve in der Ebene des Codestreifens 60
- 30: Detektor zum Nachweisen von Detektionslicht 18
- 32: Detektor zum Nachweisen von Detektionslicht 18
- 40: Steuer- und Auswerteeinheit
- 60: Codestreifen
- 62: Erstreckungsrichtung des Codestreifens
- 64: Marker des Codestreifens 60
- 66: Bewegungsrichtung des Codestreifens 60
- 70: Codestreifen
- 71: Marker in dem Codestreifen 70
- 72: Fehlstellen in dem Codestreifen 70
- 74: Codestreifen
- 75: Marker in dem Codestreifen 74 (erste Farbe)
- 76: Codestreifen
- 77: Marker in dem Codestreifen 76 (zweite Farbe)
- 80: Codestreifen
- 81: Marker in dem Codestreifen (erste Farbe)
- 82: Marker in dem Codestreifen (zweite Farbe)
- 83: Marker in dem Codestreifen (dritte Farbe)
- 90: Codestreifen
- 92: Erstreckungsrichtung des Codestreifens 90
- 94: Marker in Codestreifen 90 (erste Farbe)
- 96: Marker in Codestreifen 90 (zweite Farbe)
- 100: optischer Sensor
- 110: erster Lichtsender (erste Farbe)
- 111: zweiter Sender (zweite Farbe)
- 112: Sendelicht (erste Farbe)
- 113: Sendelicht (zweite Farbe)
- 114: Strahlvereiniger
- 118: Detektionslicht (enthält erste und zweite Farbe, von Codeband 90 zurückgestrahltes Sendelicht 112, 113)
- 140: Steuer- und Auswerteeinheit
- 130: erster Detektor (für Anteil der ersten Farbe im Detektionslicht 118)
- 131: zweiter Detektor (für Anteil der zweiten Farbe in Detektionslicht 118)
- 132: Detektionsfilter vor Detektor 130 (Anteil der ersten Farbe in Detektionslicht 118 wird transmittiert)
- 133: Detektionsfilter vor Detektor 131 (Anteil der zweiten Farbe in Detektionslicht 118 wird transmittiert)
- 191: von dem Detektor 131 nachgewiesenes Detektionssignal
- 192: von dem Detektor 130 nachgewiesenes Detektionssignal
- 200: erfindungsgemäßes System
- 300: optischer Sensor
- 400: erfindungsgemäßes System
- f1: Modulationsfrequenz des Empfangssignals (Bewegungsrichtung 23 des Lichtflecks 20 entgegen der Bewegungsrichtung 66 des Codebands 60)
- f2: Modulationsfrequenz des Empfangssignals (Bewegungsrichtung 21 des Lichtflecks 20 in Richtung der Bewegungsrichtung 66 des Codebands 60)
- x: x-Achse
- α: Winkel zwischen der Erstreckungsrichtung 62 des Codestreifens 60 und der x-Achse
- β: Winkel zwischen Achse 12 des Senders 10 und der Erstreckungsrichtung 62 des Codestreifens 60

## Patentansprüche

1. System zur Bestimmung einer Bewegung eines Codestreifens relativ zu einem optischen Sensor,
mit dem Codestreifen (60), der entlang einer Erstreckungsrichtung (62) eine Vielzahl von Markern (64) aufweist, und mit dem optischen Sensor (100) der folgende Komponenten aufweist:
mindestens ein Lichtsender (10) zum Senden eines Sendelichtstrahls (12) als mindestens ein Leuchtfleck (20) auf den Codestreifen (60),
mindestens einen Detektor (30, 32) zum Nachweisen von von dem Codestreifen (60) infolge der Bestrahlung mit dem Leuchtfleck (20) abgestrahltem Detektionslicht (18) und
eine Steuer- und Auswerteeinheit (40) zum Ansteuern des mindestens einen Senders (10) und zum Auswerten eines von dem mindestens einen Detektor (30, 32) nachgewiesenen Detektionssignals (19),
**dadurch gekennzeichnet,**
**dass** zum Ablenken des Sendelichtstrahls (12) eine ansteuerbare Strahlablenkeinrichtung (16) vorhanden ist und
**dass** die Steuer- und Auswerteeinheit (40) dazu eingerichtet ist,
die Strahlablenkeinrichtung (16) dergestalt anzusteuern, dass der Leuchtfleck (20) auf dem Codestreifen (60) in seiner Erstreckungsrichtung (62) hin und her bewegt wird, und
anhand einer durch die Marker (64) bewirkten Zeitabhängigkeit des nachgewiesenen Detektionssignals (19) eine Bewegung des Codestreifens (60) relativ zu dem optischen Sensor (100) zu bestimmen.

2. System nach Anspruch 1,
**dadurch gekennzeichnet,**
**dass** der Codestreifen (60; 90) und der optische Sensor (100; 300) relativ zueinander dergestalt angeordnet sind, dass die Erstreckungsrichtung (62) des Codestreifens (60) quer zu einer mittleren Senderichtung (11) des Sendelichtstrahls (12; 112, 113) orientiert ist.

3. System nach einem der Ansprüche 1 oder 2,
**dadurch gekennzeichnet,**
**dass** die Marker des Codestreifens (60) durch Streifen (64; 75; 77, 81, 82, 83) gebildet sind, insbesondere lichtstreuende Streifen, die auf dem Codestreifen (60) quer, insbesondere senkrecht, zur Erstreckungsrichtung (62) angeordnet sind.

4. System nach einem der Ansprüche 1 bis 3,
**dadurch gekennzeichnet,**
**dass** zum Trennen von Sendelicht (12) und Detektionslicht (18) ein Strahlteiler (14) vorhanden ist, der im Sendestrahlengang strahlaufwärts von der Strahlablenkeinrichtung (16) angeordnet ist.

5. System nach Anspruch 4,
**dadurch gekennzeichnet,**
**dass** mindestens ein Detektor (30) zum Nachweisen von Detektionslicht (18) im Detektionsstrahlengang strahlabwärts von dem Strahlteiler (14) angeordnet ist.

6. System nach einem der Ansprüche 1 bis 5,
**dadurch gekennzeichnet,**
**dass** mindestens ein Detektor (32) zum Nachweisen von Detektionslicht (18) dergestalt angeordnet ist, dass von dem Codestreifen (60) kommendes Detektionslicht (18) auf direktem Weg zu diesem Detektor (32) gelangen kann.

7. System nach einem der Ansprüche 1 bis 6,
**dadurch gekennzeichnet,**
**dass** die Strahlablenkeinrichtung mindestens einen verschwenkbaren Spiegel (16) aufweist.

8. System nach Anspruch 7 ,
**dadurch gekennzeichnet,**
**dass** mindestens einer der verschwenkbaren Spiegel (16) ein mikromechanischer Spiegel oder ein galvanometrischer Scanner-Spiegel ist.

9. System nach einem der Ansprüche 1 bis 8,
**dadurch gekennzeichnet,**
**dass** die Strahlablenkeinrichtung (16) zur zweidimensionalen Ablenkung des Sendestrahls (12) eingerichtet ist.

10. System nach einem der Ansprüche 1 bis 9,
**dadurch gekennzeichnet,**
**dass** der Codestreifen (70; 80) jeweils eine Vielzahl von unterschiedlichen Marker (75; 77; 81, 82, 83) aufweist, die jeweils unterschiedliche spektrale optische Eigenschaften, insbesondere eine jeweils spektral unterschiedliche Reflexion, Streuvermögen und/oder Transmission, aufweisen.

11. System nach einem der Ansprüche 1 bis 10,
**dadurch gekennzeichnet,**
**dass** mindestens ein erster Lichtsender (110) und ein zweiter Lichtsender (111) vorhanden sind, wobei ein Spektrum des Sendelichts des ersten Lichtsenders (110) sich von dem Spektrum des Sendelichts des zweiten Lichtsenders (111) unterscheidet.

12. System nach einem der Ansprüche 1 bis 11,
**dadurch gekennzeichnet,**
**dass** zum Nachweis von unterschiedlichen spektralen Komponenten des Detektionslichts (118) mehrere Detektoren (130, 131) vorhanden sind.

13. System nach einem der Ansprüche 1 bis 12,
**dadurch gekennzeichnet,**
**dass** vor jedem der Detektoren (130, 131) ein Detektionsfilter (132, 133) angeordnet ist.

14. System nach einem der Ansprüche 1 bis 13,
**dadurch gekennzeichnet,**
**dass** die Steuer- und Auswerteeinheit zum sicherheitsgerichteten Auswerten der Detektionssignale der Detektoren (130, 131) eingerichtet ist.

15. Verfahren zum Bestimmen einer Bewegung eines Codestreifens relativ zu einem optischen Sensor, bei dem folgende Verfahrensschritte durchgeführt werden:
mit mindestens einem Sender (10) des optischen Sensors (100) wird Sendestrahlung (12) auf den Codestreifen (60) gestrahlt, der entlang einer Erstreckungsrichtung (62) eine Vielzahl von Markern (64) aufweist,
wobei ein Leuchtfleck (20) der Sendestrahlung (12) auf dem Codestreifen (60) entlang der Erstreckungsrichtung (62) hin und her bewegt wird,
von dem Codestreifen (60) infolge der Bestrahlung abgestrahltes Detektionslicht (18) wird mit mindestens einem Detektor (30, 32) des optischen Sensors (100) als mindestens ein Detektionssignal (19) nachgewiesen und
anhand einer durch die Marker (64) bewirkten Zeitabhängigkeit des Detektionssignals (19) oder der Detektionssignale (19) wird eine Bewegung des Codestreifens (60) relativ zu dem optischen Sensor (100) bestimmt.

16. Verfahren nach Anspruch 15,
**dadurch gekennzeichnet,**
**dass** der Leuchtfleck (20) in der Ebene des Codestreifens (60) entlang von einem linearen Weg (22) hin und her bewegt wird.

17. Verfahren nach einem der Ansprüche 15 oder 16,
**dadurch gekennzeichnet,**
**dass** der Leuchtfleck (20) in der Ebene des Codestreifens (60) in einer geschlossenen Kurve (24) bewegt wird.

18. Verfahren nach Anspruch 17,
**dadurch gekennzeichnet,**
**dass** die geschlossene Kurve (24; 26) kreis- oder ellipsenförmig ist.

19. Verfahren nach einem der Ansprüche 15 bis 18,
**dadurch gekennzeichnet,**
**dass** eine Geschwindigkeit (66) des Codestreifens (60) in Richtung seiner Erstreckungsrichtung bestimmt wird durch Auswerten einer Modulation (f1, f2), insbesondere einer Modulationsfrequenz, die dem Detektionssignal (19) durch die Marker (64) des Codestreifens (60) aufgeprägt wird.

20. Verfahren nach einem der Ansprüche 15 bis 19,
**dadurch gekennzeichnet,**
**dass** ein Abstand des Codestreifens (60) von dem optischen Sensor (100; 300) bestimmt wird durch Vergleich der Modulation (f1), insbesondere der Modulationsfrequenz, des Detektionssignals (19) bei Bewegung des Leuchtflecks (20) in einer ersten Bewegungsrichtung (23) mit der Modulation (f2), insbesondere einer Modulationsfrequenz, des Detektionssignals (19) bei Bewegung des Leuchtflecks (20) in einer zur ersten Bewegungsrichtung entgegengesetzten zweiten Bewegungsrichtung (21).

21. Verfahren nach einem der Ansprüche 15 bis 20,
**dadurch gekennzeichnet,**
**dass** das Detektionssignal (19) einer Fourier-Analyse unterworfen wird.

22. Verfahren nach einem der Ansprüche 15 bis 21,
**dadurch gekennzeichnet,**
**dass** mindestens eine der Geschwindigkeiten eines Phasenwinkels (Φ) der Strahlablenkeinheit (16) eine sinusartige Zeitabhängigkeit aufweist.

23. Verfahren nach einem der Ansprüche 15 bis 22,
**dadurch gekennzeichnet,**
**dass** eine Phasenverschiebung des Detektionssignals (19) relativ zu einem Phasenwinkel (Φ) der Strahlablenkeinrichtung (16) bestimmt wird und dass aus der Phasenverschiebung ein Winkel (α) einer Verdrehung des Codestreifens (60) relativ zu dem optischen Sensor (100) um eine Achse parallel zu einem Abstandsvektor zwischen dem optischen Sensor (100) und dem Codestreifen (60) bestimmt wird.

24. Verfahren nach einem der Ansprüche 15 bis 23,
**dadurch gekennzeichnet,**
**dass** durch Vergleich einer durch den Codestreifen (60) bewirkten Modulation, insbesondere einer Modulationsfrequenz, des Detektionssignals (19) mit derjenigen Modulation, insbesondere der Modulationsfrequenz, des Detektionssignals (19), die für eine kreisförmige Bewegung des Leuchtflecks (20) in der Ebene des Codestreifens (60) erwartet wird, eine tatsächliche Form der Bewegung des Leuchtflecks (20) in der Ebene des Codestreifens (60) bestimmt wird und
**dass** durch Auswerten der tatsächlichen Form der Bewegung des Leuchtflecks (20) auf dem Codestreifen (60) ein Verkippungswinkel (β) des Codestreifens (60) relativ zu einer Achse (11) des Senders (10) ermittelt wird.
